# EUROPEAN PATENT APPLICATION

(11) **EP 1 764 788 A1**
(43) Date of publication of application: **21.03.2007**
(21) Application number: 05752913.3
(22) Date of filing: 23.06.2005
(51) Int. Cl.: G11B 7/125, G11B 7/085

(54) **OPTICAL DISK DEVICE AND OPTICAL DISK SEMICONDUCTOR**

(30) Priority: 24.06.2004 JP 2004186072
(71) Applicant: MATSUSHITA ELECTRIC INDUSTRIAL CO., LTD., Osaka 571-8501 (JP)
(72) Inventor: FUJIUNE, Kenji, Matsushita Elec. Ind. Co., Ltd., Chuo-ku, Osaka-shi, Osaka 540-6319 (JP); KONDO, Kenji, Matsushita Elec. Ind. Co., Ltd., Chuo-ku, Osaka-shi, Osaka 540-6319 (JP); OKADA, Yuu, c/o Matsushita Elec. Ind. Co., Ltd., Chuo-ku, Osaka-shi, Osaka 540-6319 (JP)
(74) Representative: Eisenführ, Speiser & Partner
(86) International application number: PCT/JP2005/011515
(87) International publication number: WO 2006/001327

(57) **Abstract**

Search time increases if spherical aberration has to be varied for each radial location due to the influence of a disk or lens tilt. An optical disk device includes a spherical aberration search unit (spherical aberration setter 52) for varying an amount of spherical aberration applied to a light beam, a focus search unit (focus movement calculator 47 and focus search drive generator 49) for movi ng the focal point of the light beam from a current information plane to a target information plane, a track search unit (track movement calculator 48 and track search drive generator 50) for moving the focal point of the light beam from a current track to a target track, and a search procedure indication unit (search procedure indicator 41) for actuating the spherical aberration search unit, the focus search unit, and the track search unit, in that order, at the time of a search. The search time is reduce d by changing the spherical aberration all at once, both for movement in the layer direction and for movement in the radial direction.

## Description

### Technical Field

The present invention relates to an optical disk device that performs a search operation in recording to or reproducing from a disk -shaped information carrier (hereinafter referred to as an optical disk) with which recording can be performed.

### Background Art

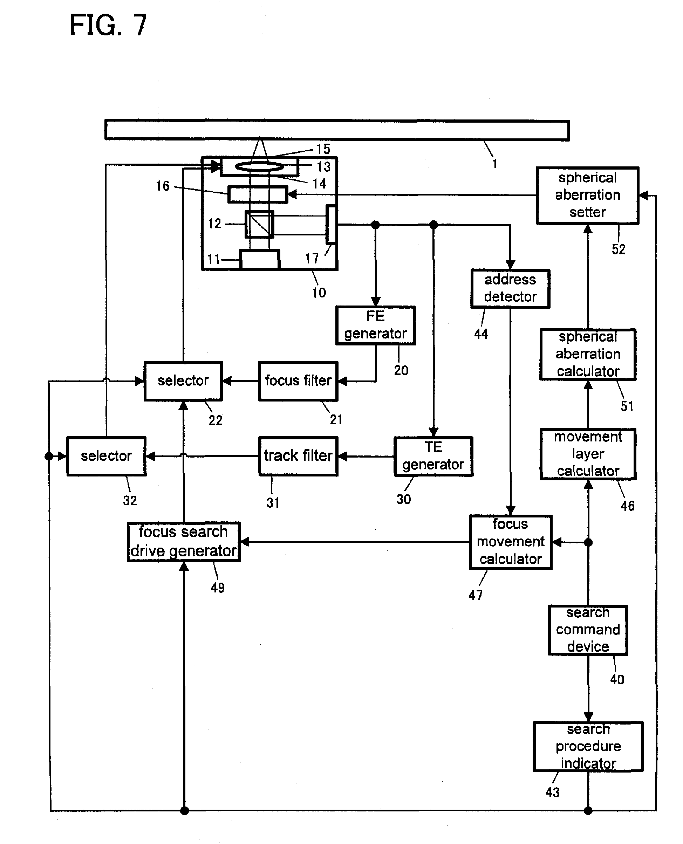

When a signal is reproduced with a conventional optical disk device, an optical disk 1 (see FIG. 7), which is an information carrier, is irradiated with a relatively weak light beam having a specific luminous energy, and reflected light that has been modulated in strength by the optical disk 1 is detected. A signal is recorded by modulating the luminous energy of a light beam according to the signal to be recorded, and writing information to a recording material film on the optical disk 1.

With a read-only optical disk 1, information is recorded ahead of time as a spiral pattern of pits. Also, an optical disk 1 which is capable of both recording and reproduction is produced by forming a film of a material capable of optical recording and reproduction, by vapor deposition or another such method on the surface of a substrate having a spiral track with a pitted construction. To record information to the optical disk 1, or to reproduce information that has been recorded, it is necessary to perform focus control, in which the light beam is controlled in the normal direction of a plane of the optical disk 1 (hereinafter referred to as the focus direction) so that a specific st ate of convergence remains consistent on the recording material film, and tracking control, in which the light beam is controlled in the radial direction of the optical disk 1 (hereinafter referred to as the tracking direction) so that the beam is always located over a specific track.

The operation of a conventional optical disk device will be described through reference to FIGS. 7 to 9. FIG. 7 is a block diagram of a conventional optical disk device. FIG. 8 is an example of a flowchart of the overall se arch process. FIG. 9 is an example of a flowchart of the search movement operation executed by a search procedure indicator 43.

In FIG. 7, the focus error detection unit is a FE generator 20. The focus control unit comprises a focus filter 21 and a selector 22. The track error detection unit is a TE generator 30. The tracking control unit comprises a track filter 31 and a selector 32. The spherical aberration search unit is a spherical aberration setter 52. The focus search unit comprises a focus movement calculator 47 and a focus search drive generator 49.

A semiconductor laser 11, a converging lens 13, a beam splitter 12, a focus actuator 14, a track actuator 15, a spherical aberration generator 16, and a photodetector 17 are attached to an optical head 10. The light beam generated from the semiconductor laser 11 passes through the beam splitter 12, the amount of spherical aberration is changed by the spherical aberration generator 16, and the beam is converged by the converging lens 13 on the opti cal disk 1. The light beam reflected by this disk goes back through the converging lens 13 and the spherical aberration generator 16, is reflected by the beam splitter 12, and shines on the photodetector 17. The converging lens 13 is supported by an elas tic body (not shown), and when current flows to the focus actuator 14, this lens is moved in the focus direction by electromagnetic force. When current flows to the track actuator 15, the lens is moved in the tracking direction by electromagnetic force. The photodetector 17 produces a signal corresponding to the detected luminous energy.

The photodetector 17 sends the signal thus produced to the FE generator 20, the TE generator 30, and an address detector 44.

The FE generator 20 uses the luminous energy signal of the photodetector 17 to calculate an error signal indicating the focus state of the light beam on an information plane of the optical disk 1, that is, an error signal corresponding to the amount of offset of the focal point of the light beam wi th respect to an information plane of the optical disk 1 (hereinafter referred to as an FE signal), and sends this signal to the focus filter 21. The focus filter 21 produces drive for performing focus control according to the signal from the FE generator 20, and sends this drive through the selector 22 to the focus actuator 14.

The TE generator 30 uses the luminous energy signal from the photodetector 17 to calculate a TE signal indicating the positional relationship between the track and the light beam on the optical disk 1, and sends this signal to the track filter 31. The track filter 31 produces drive for performing tracking control according to the signal from the TE generator 30, and sends this drive through the selector 32 to the track actuator 15 .

A search command device 40 sends a search operation start command to the search procedure indicator 43 so that the focal point of the light beam will be located at the target address, and sends the target address to a movement layer calculator 46 and th e focus movement calculator 47. The search procedure indicator 43 sends an actuation signal according to a specific procedure to the selector 22, the selector 32, the focus search drive generator 49, and the spherical aberration setter 52.

The address detector 44 uses the signal from the photodetector 17 to detect the current address of the optical disk 1 where the focal point of the light beam is located, and sends this address to the focus movement calculator 47. The focus movement calculator 47 calcul ates the amount of movement in the focus direction needed for the focal point of the light beam to reach the target address, on the basis of the current address from the address detector 44 and the target address from the search command device 40, and sends this amount to the focus search drive generator 49. The focus search drive generator 49 produces a drive waveform corresponding to the amount of movement obtained from the focus movement calculator 4 7 in accordance with an operating signal from the sear ch procedure indicator 43, and sends this drive waveform through the selector 22 to the focus actuator 14.

The movement layer calculator 4 6 calculates the information plane location of the optical disk 1 where the target address from the search command device 40 is present, and sends the result to the spherical aberration calculator 51. A spherical aberration calculator 51 sends to the spherical aberration setter 52 a spherical aberration setting amount that has been pre -stored according to the information plane location from the movement layer calculator 46. The spherical aberration setter 52 drives the spherical aberration generator 16 according to the actuation signal from the search procedure indicator 43 so that the amount of spherical aberration a t the focal point of the light beam will be the spherical aberration amount from the spherical aberration calculator 51.

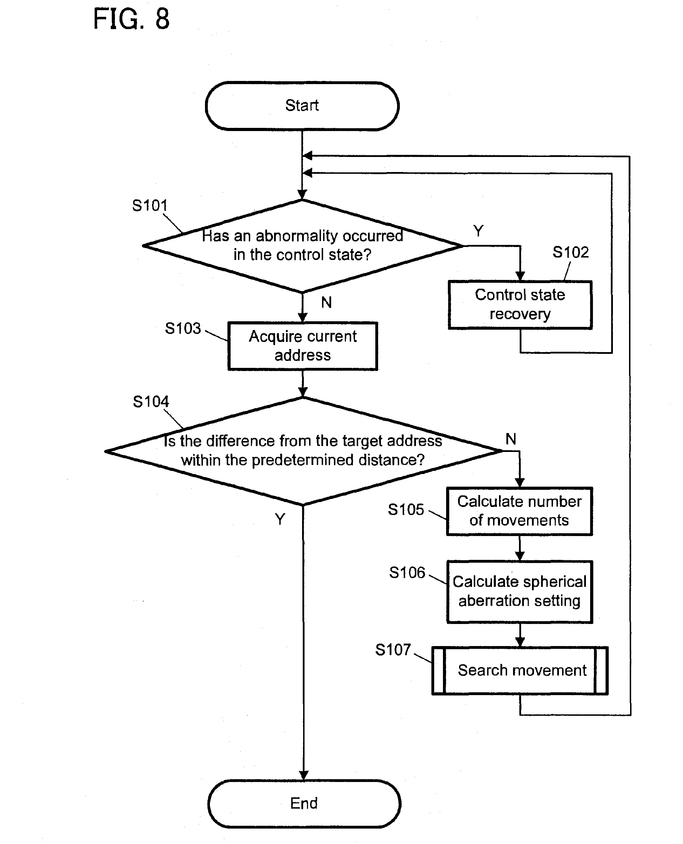

The search operation in an optical disk device will now be briefly described, step by step, through reference to FIG. 8.

Step S101: It is determined whether or not the focus control and tracking control are in their normal state. For example, focus control is determined to be in an abnormal state if the signal from the FE generator 20 continues to be at or above a predetermined level for a predetermined length of time or longer.

Step S102: If the focus control or tracking control is in an abnormal state, this is corrected to a normal state by performing control pull -in again for each.

Step S103: If the focus control and tracking co ntrol are in a normal state, the address detector 44 acquires the current address.

Step S104: It is determined whether or not the current address acquired by the address detector 44 is within a predetermined distance from the target address.

Step S105: If the current address acquired by the address detector 44 is not within a predetermined distance from the target address, the focus movement calculator 47 calculates the number of planes of movement in the focus direction required for the focal point of the light beam to reach the target address, according to the current address from the address detector 44 and the target address from the search command device 40.

Step S106: The amount of spherical aberration corresponding to the information plane to which the target address belongs is determined. For example, the movement layer calculator 46 determines the information plane to which the target address belongs according to the target address from the search command device 40. The spherical aberration calculator 51 calculates the amount of spherical aberration to be set, according to the information plane information from the movement layer calculator 46.

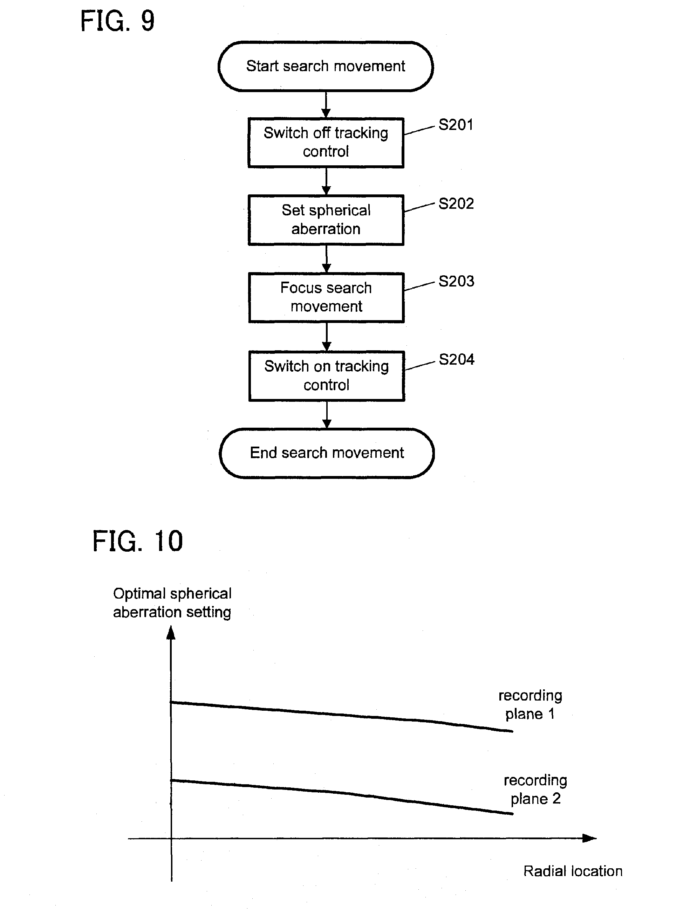

Step S107: The actual search movement operation is executed according to the command from the sear ch procedure indicator 43. This will be described in detail, step by step, through reference to FIG. 9.

Step S201: The tracking control is put in a non -operating state. For example, the selector 32 is operated so that no signal will be sent from the tr ack filter 31 to the track actuator 15.

Step S202: The amount of spherical aberration is changed according to the target address. For example, the spherical aberration setter 52 drives the spherical aberration generator 16 according to the signal from the spherical aberration calculator 51.

Step S203: The light beam is moved in the focus direction. For example, the selector 22 makes a connection such that the signal from the focus search drive generator 49 is sent to the focus actuator 14. The focus search drive generator 49 sends a drive signal through the selector 22 to the focus actuator 14 for moving the converging lens 13 up or down according to the amount of movement obtained from the focus movement calculator 47. After the converging lens 13 has been moved, the selector 22 makes a connection such that the signal from the focus filter 21 is sent to the focus actuator 14. (See Patent Document 1, for example.)

Step S204: The tracking control is put in an operating state. For example, the selector 32 is operated so that the signal from the track filter 31 is sent to the track actuator 15.
Patent Document 1: Japanese Laid-Open Patent Application 2003-22545

### Disclosure of the Invention

### Problems Which the Invention is Intended to Solve

If the error in the amount of spherical aberration in the focal point of the light beam is too large, the FE signal from the FE generator 20, the TE signal from the TE generator 30, the recording and reproduction signal, and so forth will deteriorate and recording and reproduction cannot be performed properly.

FIG. 10 shows the ideal amount of spherical aberration imparted to a light beam, according to the radial location and the information plane in which the focal point of the light beam is located. The horizonta 1 axis is the radial location of the focal point of the light beam with respect to the optical disk 1, and the vertical axis is the amount of spherical aberration. The optimal amount of spherical aberration will depend on the distance of the information p lane in question of the optical disk 1 and the surface of the optical disk 1. With an optical disk 1 having a plurality of information planes, if the information plane of the optical disk 1 on which recording and reproduction are performed is changed, the amount of spherical aberration of the light beam must also be changed according to the distance between these information planes. Also, even greater density and precision are needed, so not only the influence of the distance between the information planes of the optical disk 1, but also that of inconsistency (non -uniformity) in the distance between the surface and the information plane due to radial location can no longer be ignored.

Accordingly, the amount of spherical aberration of the light beam must be changed according to the radial location of the focal point of the light beam, and during a search operation, the amount of spherical aberration must be changed not only upon movement in the focus direction, but also upon movement in the track direction

From the standpoint of location reproducibility, the spherical aberration generator 16 sometimes has a configuration in which the distance of a pair of lenses is changed with a stepping motor. Positional movement by drive with a stepping motor or other such motor requires low-speed movement at the start and end of the movement, and high - speed movement in between, so a drive signal is produced on the basis of a preset speed profile. Accordingly, moving a given distance takes longer when the movement is divided up into a plurality of stages. Therefore, a problem is that when the movement is in the track direction, the search time will be longer if the spherical aberration is merely changed, just as when the movement is in the focus direction.

The present invention was conceived in an effort to solve the above problems, and it is an object thereof to provide an optical disk device that performs a rapid search operation.

### Means Used to Solve the Above -Mentioned Problems

The optical disk device pertaining t o the first invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a sign al corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the foc al point of a light beam from a current information plane to the target information plane;
a track search unit for moving the focal point of a light beam from a current track to a target track; and
a search procedure indication unit for actuating the sph erical aberration search unit, the focus search unit, and the track search unit, in that order, at the time of a search.

Here, the derivation of the amount of spherical aberration by the spherical aberration derivation unit may be performed by reading a value stored ahead of time in a table or the like with respect to the target information plane and the target track. It may also be performed by calculation using the target information plane and the target track.

The optical disk device pertaining to the second invention is that of the first invention, wherein the search procedure indication unit does not put the tracking control unit in an operating state in between operation s of the focus search unit and the track search unit.

Here, "does not put the t racking control unit in an operating state" may mean that the non-operating state of the tracking control is maintained, for example . It means that the tracking control is not performed in between the operation s of the focus search unit and the track search unit.

The optical disk device pertaining to the third invention is that of the first invention, wherein the search procedure indication unit actuates the track search unit after putting focus control in a non -operating state if the focus control is in an abnormal state in between operation s of the focus search unit and the track search unit.

Here, an abnormality in the focus control may be detected by the search procedure indication unit, or may be detected by a focus abnormality detection unit for detecting that the focus control is no longer in its normal control state. Also, an abnormality in the focus control is detected, for example, on the basis of a signal acquired from the focus error detection unit (more specifically, the amount of light reflected by the information carrier, etc.). The phrase "in between operation s of the focus search unit and the track search unit" means, for example, after the operation of the focus search unit and before the operation of the track search unit.

The optical disk device pertaining to the fourth invention is that of the third invention, wherein the search procedure indication unit actuates the track search unit only when there at least a predetermined number of tracks are searched.

The optical disk device pert aining to the fifth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the tr ack error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the track search unit, the spherical aberration search unit, and the focus search unit, in that order, at the time of a search.

Here, the derivation of the amount of spherical aberration by the spherical aberration derivation unit may be performed by rea ding a value stored ahead of time in a table or the like with respect to the target information plane and the target track. It may also be performed by calculation using the target information plane and the target track.

The optical disk device pertaining to the sixth invention is that of the first or fifth invention, wherein the search procedure indication unit puts the focus control unit in a non-operating state while continuing operation of the track search unit if focus control is in an abnormal state during the operation of the track search unit.

Here, an abnormality in the focus control may be detected by the search procedure indication unit, or may be detected by a focus abnormality detection unit for detecting that the focus control is no longer i n its normal control state. Also, an abnormality in the focus control is detected, for example, on the basis of a signal acquired from the focus error detection unit (more specifically, the amount of light reflected by the information carrier, etc.).

The optical disk device pertaining to the seventh invention is that of the sixth invention, wherein the search procedure indication unit continues the operation of the track search unit only when at least a predetermined number of tracks are searched.

The optical disk device pertaining to the eighth invention is that of the third or sixth invention, further comprising a pull-in spherical aberration setting unit for setting the amount of spherical aberration according to the information plane to which focus is to be pulled in, wherein the search procedure indication unit actuates the focus control unit with respect to the information plane to which the pull -in spherical aberration setting unit corresponds.

The optical disk device pertaining to the ninth invent ion is that of the third or sixth invention, wherein the search procedure indication unit actuates the focus control unit with respect to the information plane to which the spherical aberration search unit corresponds.

The optical disk device pertaining t o the tenth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a sign al corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the foc al point of a light beam from a current information plane to the target information plane;
a track search unit for moving the focal point of a light beam from a current track to a target track; and
a search procedure indication unit for actuating the tra ck search unit and the spherical aberration search unit simultaneously at the time of a search.

Here, the derivation of the amount of spherical aberration by the spherical aberration derivation unit may be performed by reading a value stored ahead of time in a table or the like with respect to the target information plane and the target track. It may also be performed by calculation using the target information plane and the target track. The phrase "actuating the track search unit and the spherical aberration search unit simultaneously" means that the two operations overlap in a given space of time.

The optical disk device pertaining to the eleventh invention is that of the tenth invention, wherein the search procedure indication unit concludes operatio ns of the track search unit and the spherical aberration search unit prior to a start of focus control on the target information plane.

The optical disk device pertaining to the twelfth invention is that of the tenth or eleventh invention, wherein the sea rch procedure indication unit varies timings at which operations of the track search unit and the spherical aberration search unit are started such that the operations are ended simultaneously.

The optical disk device pertaining to the thirteenth invention is that of the tenth or eleventh invention, wherein the search procedure indication unit varies operation speeds of the track search unit and the spherical aberration search unit such that operations of the track search unit and the spherical aberration search unit are started and end ed simultaneously.

Here, an "operation speed" refers, for example, to a search movement speed of the track search unit or spherical aberration search unit.

The optical disk device pertaining to the fourteenth invention is t hat of the twelfth or thirteenth invention, wherein the track search unit goes into a standby mode for a predetermined time after movement of the focal point of a light beam.

The optical disk device pertaining to the fifteenth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the fo cal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to a target information plane;
a track search unit for moving the focal point of a light beam from a current track to a target track; and
a search procedure indication unit for actuating the focus search unit and the spherical aberration search unit simultaneously at the time of a search.

Here, the derivation of the amount of spherical aberration by the spherical aberration derivation unit may be performed by reading a value stored ahead of time in a table or the like with respect to th e target information plane and the target track. It may also be performed by calculation using the target information plane and the target track. The phrase "actuating the focus search unit and the spherical aberration search unit simultaneously" means that the two operations overlap in a given space of time.

The optical disk device pertaining to the sixteenth invention is that of the fifteenth invention, wherein the search procedure indication unit ends operations of the focus search unit and the spheri cal aberration search unit prior to a start of tracking control in the target track.

The optical disk device pertaining to the seventeenth invention is that of the fifteenth or sixteenth invention, wherein the search procedure indication unit varies timings at which operations of the focus search unit and the spherical aberration search unit are started such that the operations are ended simultaneously.

The optical disk device pertaining to the eighteenth invention is that of the seventeenth invention, wh erein the focus search unit goes into a standby mode for a predetermined time after movement of the focal point of a light beam.

The optical disk semiconductor pertaining to the nineteenth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target inform ation plane;
a track search unit for moving the focal point of a light beam from a current track to a target track; and
a search procedure indication unit for actuating the spherical aberration search unit, the focus search unit, and the track search unit, in that order, at the time of a search.

Here, the derivation of the amount of spherical aberration by the spherical aberration derivation unit may be performed by reading a value stored ahead of time in a table or the like with respect to the target in formation plane and the target track. It may also be performed by calculation using the target information plane and the target track.

The optical disk semiconductor pertaining to the twentieth invention is that of the nineteenth invention, wherein the search procedure indication unit does not put the tracking control unit in an operating state in between operation s of the focus search unit and the track search unit.

Here, "does not put the tracking control unit in an operating state" may mean that the non-operating state of the tracking control is maintained, for example. It means that the tracking control is not performed in between the operation s of the focus search unit and the track search unit.

The optical disk semiconductor pertaining to the twenty-first invention is that of the nineteenth invention, wherein the search procedure indication unit actuates the track search unit after putting focus control in a non -operating state if the focus control is in an abnormal state in between operations of the focus search unit and the track search unit.

Here, an abnormality in the focus control may be detected by the search procedure indication unit, or may be detected by a focus abnormality detection unit for detecting that the focus control is no longer i n its normal control state. Also, an abnormality in the focus control is detected, for example, on the basis of a signal acquired from the focus error detection unit (more specifically, the amount of light reflected by the information carrier, etc.). The phrase "in between operation s of the focus search unit and the track search unit" means, for example, after the operation of the focus search unit and before the operation of the track search unit.

The optical disk semiconductor pertaining to the twenty-second invention is that of the twenty-first invention, wherein the search procedure indication unit actuates the track search unit only when at least a predetermined number of tracks are searched.

The optical disk semiconductor pertaining to the twenty-third invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corr esponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the track sear ch unit, the spherical aberration search unit, and the focus search unit, in that order, at the time of a search.

Here, the derivation of the amount of spherical aberration by the spherical aberration derivation unit may be performed by reading a value st ored ahead of time in a table or the like with respect to the target information plane and the target track. It may also be performed by calculation using the target information plane and the target track.

The optical disk semiconductor pertaining to the twenty-fourth invention is that of the nineteenth or twenty-third invention, wherein the search procedure indication unit puts the focus control unit in a non-operating state while continuing operation of the track search unit if focus control is in an abnormal state during the operation of the track search unit.

Here, an abnormality in the focus control may be detected by the search procedure indication unit, or may be detected by a focus abnormality detection unit for detecting that the focus control is no longer in its normal control state. Also, an abnormality in the focus control is detected, for example, on the basis of a signal acquired from the focus error detection unit (more specifically, the amount of light reflected by the information carrier, etc.).

The optical disk semiconductor pertaining to the twenty-fifth invention is that of the twenty-fourth invention, wherein the search procedure indication unit continues the operation of the track search unit only when at least a predetermined number of tracks are searched.

The optical disk semiconductor pertaining to the twenty-sixth invention is that of the twenty-first or twenty-fourth invention, further comprising a pull-in spherical aberration setting unit for setting the amount of spherical aberration according to the information plane to which the focus is to be pulled in, wherein the search procedure indication unit actuates the focus control unit with respect to the information plane to which the pull-in spherical aberration setting unit corresponds.

The optical disk semiconductor pertaining to the twenty-seventh invention is that of the twenty-first or twenty-fourth invention, wherein the search procedure indication unit actuates the focus control unit with respect to the information plane t o which the spherical aberration search unit corresponds.

The optical disk semiconductor pertaining to the twenty-eighth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a li ght beam from a current track to a target track; and
a search procedure indication unit for actuating the track search unit and the spherical aberration search unit simultaneously at the time of a search.

Here, the derivation of the amount of spherical aberration by the spherical aberration derivation unit may be performed by reading a value stored ahead of time in a table or the like with respect to the target information plane and the target track. It may also be performed by calculation using the targ et information plane and the target track. The phrase "actuating the track search unit and the spherical aberration search unit simultaneously" means, for example, that the two operations overlap in a given space of time.

The optical disk semiconductor pertaining to the twenty-ninth invention is that of the twenty-eighth invention, wherein the search procedure indication unit concludes operations of the track search unit and the spherical aberration search unit prior to a start of focus control on the tar get information plane.

The optical disk semiconductor pertaining to the thirtieth invention is that of the twenty-eighth or twenty-ninth invention, wherein the search procedure indication unit varies timings at which operations of the track search unit an d the spherical aberration search unit are started such that the operations are ended simultaneously.

The optical disk semiconductor pertaining to the thirty -first invention is that of the twenty-eighth or twenty-ninth invention, wherein the search proced ure indication unit varies operation speeds of the track search unit and the spherical aberration search unit such that operations of the track search unit and the spherical aberration search unit are started and ended simultaneously.

Here, an "operation speed" refers, for example, to a search movement speed of the track search unit or spherical aberration search unit.

The optical disk semiconductor pertaining to the thirty -second invention is that of the thirtieth or thirty-first invention, wherein the t rack search unit goes into a standby mode for a predetermined time after the movement of the focal point of a light beam.

The optical disk semiconductor pertaining to the thirty -third invention comprises:
a focus error detection unit for detecting a sign al corresponding to positional offset of the focal point of a light beam with respect to a surface or an information plane of an information carrier;
a focus control unit for varying a state of convergence of a light beam so that the focal point of the li ght beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the in formation carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the focus search unit and the spherical aberration search unit simultaneously at the time of a search.

Here, the derivation of the amount of spherical aberration by the spherical aberration derivation unit may be performed by reading a value stored ahead of time in a table or the like with respect to the target information plane and the target track. It may also be performed by calculation using the target information plane and the target track. The phrase "actuating the focus search unit and the spherical aberration search unit simultaneously" means that the two operations overlap in a given space of time.

The optical disk semiconductor pertaining to the thirty -fourth invention is that of the thirty-third invention, wherein the search procedure indication unit ends operations of the focus search unit and the spherical aberration search unit prior to a start of tracking control in the target track.

The optical disk semiconductor pertaining to the thirty -fifth invention is that of the thirty-third or thirty-fourth invention, wherein the search procedure indication unit varies timings at which operations of the focus search unit and the spherical aberration search unit are started such that the operations are ended simultaneously.

The optical disk semiconductor pertaining to the thirty -sixth invention is that of the thirty-fifth invention, wherein the focus search unit goes into a standby mode for a predetermined time after the movement of the focal point of a light beam.

### Effect of the Invention

The optical disk device pertaining to the first invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the spherical aberration search unit, the focus search unit, and the track search unit, in that order, at the time of a search.

The spherical aberration derivation unit derives the amount of spherical aberration after search movement from the target information plane and the target track. The optical disk device of the pres ent invention performs a search operation by using this derived spherical aberration amount, so there is no need to vary the setting of the amount of spherical aberration every time the focus search unit and the track search unit are operated, and this all ows the search operation to be performed more rapidly.

The optical disk device pertaining to the second invention is that of the first invention, wherein the search procedure indication unit does not put the tracking control unit in an operating state in between operations of the focus search unit and the track search unit.

With the optical disk device of the present invention, the search time can be shortened because no track pull -in operation is performed in the midst of the search operation.

The optic al disk device pertaining to the third invention is that of the first invention, wherein the search procedure indication unit actuates the track search unit after putting focus control in a non -operating state if the focus control is in an abnormal state in between operation s of the focus search unit and the track search unit.

With the optical disk device of the present invention, since the amount of spherical aberration at a target location is set, for example, the focus control is restored from the abnormal state after the light beam has been moved to the target location. Accordingly, there is no need for focus control pull -in to be performed a number of times as in the past, so the restoration time can be shortened.

The optical disk device pertaining t o the fourth invention is that of the third invention, wherein the search procedure indication unit actuates the track search unit only when at least a predetermined number of tracks are searched.

With the optical disk device of the present invention, the sum of the restoration time and the movement time in the radial direction can be shortened.

The optical disk device pertaining to the fifth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the track search unit, the spherical aberration search unit, and the focus search unit, in that order, at the time of a search.

The spherical aberration derivation unit derives the amount of spherical aberration , after search movement, from the target information plane and the target track. The optical disk device of the present invention performs a search operation by using this derived spherical aberration amount, so there is no need to vary the setting of the amount of spherical aberration every time the focus search unit and the track search unit are operated, and this allows the search operation to be performed more rapidly.

The optical disk device pertaining to the sixth invention is that of the first or fifth invention, wherein the search procedure indication unit puts the focus control unit in a non-operating state while continuing operation of the track search unit if focus control is in an abnormal state during the operation of the track search unit.

With the optical disk device of the present invention, since the amount of spherical aberration at a target location is set, for example, the focus control is restored from an abnormal state after the light beam has been moved to the target location. Accordingly, there is no need for focus control pull -in to be performed a number of times as in the past, so the restoration time can be shortened.

The optical disk device pertaining to the seventh invention is that of the sixth invention, wherein the search procedure indication unit continues the operation of the track search unit only when at least a predetermined number of tracks are searched.

With the optical disk device of the present invention, the sum of the restoration time and the movement time in the radial direction can be shortened.

The optical disk device pertaining to the eighth invention is that of the third or sixth invention, further comprising a pull-in spherical aberration setting unit for setting the amount of spherical aberration according to the information plane to which the focus is to be pulled in, wherein the search procedure indication unit actuates the focus control unit with respect to the information pla ne to which the pull-in spherical aberration setting unit corresponds.

With the optical disk device of the present invention, the amount of spherical aberration is set corresponding to the information plane in which focus pull -in is performed, and the focus pull-in is performed for that information plane, and this stabilizes the focus pull-in during restoration from the abnormal state of the focus control. As a result, it is possible to shorten the anticipated restoration time from the abnormal state of the focus control.

The optical disk device pertaining to the ninth invention is that of the third or sixth invention, wherein the search procedure indication unit actuates the focus control unit with respect to the information plane to which the spherical aberration search unit corresponds.

With the optical disk device of the present invention, the restoration time can be shortened because no layer movement operation is performed during restoration from the abnormal state of the focus control.

The optical disk device pertaining to the tenth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the track search unit and the spherical aberration search unit simultaneously at the time of a search.

The optical disk device of the present invention actuates the track search unit and the spherical aberration search unit simultaneously at the time of a search, so the search operation in which it is necessary to vary the amount of correction of spherical aberration can be performed more rapidly.

The optical disk device pertaining to the eleventh invention is that of the tenth invention, wherein the search procedure indication unit concludes operation s of the track search unit and the spherical aberration search unit prior to a start of focus control on the target information plane.

With the optical disk device of the present invention, focus control stability can be ensured at the start of the focus control.

The optical disk device pertaining to the twelfth invention is that of the tenth or eleventh invention, wherein the search procedure indication unit varies timings at which operations of the track search unit and the spherical aberration search unit are started such that the operations are ended simultaneously.

With the optical disk device of the present invention, the sum of the movement time in the radial direction and the spheri cal aberration movement time can be optimally shortened.

The optical disk device pertaining to the thirteenth invention is that of the tenth or eleventh invention, wherein the search procedure indication unit varies operation speeds of the track search un it and the spherical aberration search unit such that operations of the track search unit and the spherical aberration search unit are started and end ed simultaneously.

With the optical disk device of the present invention, a stable tracking error signal (TE signal) can be obtained even during movement in the radial direction.

The optical disk device pertaining to the fourteenth invention is that of the twelfth or thirteenth invention, wherein the track search unit goes into a standby mode for a predetermined time after movement of the focal point of a light beam.

With the optical disk device of the present invention, the search time can be shortened by taking advantage of the stabilization time after radial movement.

The optical disk device pertaining t o the fifteenth invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the focus search unit and the spherical aberration search unit simultaneously at the time of a search.

The optical disk device of the present invention actuates the focus search unit and spherical aberration search unit simultaneously at the time of a search , so a search operation in which it is necessary to vary the amount of correction of spherical aberration can be performed more rapidly.

The optical disk device pertaining to the sixteenth invention is that of the fifteenth invention, wherein the search procedure indication unit ends operation s of the focus search unit and the spherical aberration search unit prior to a start of tracking control in the target track.

The optical disk device of the present invention ensures tracking control stability at the start of the tracking control.

The optical disk device pertaining to the seventeenth invention is that of the fifteenth or sixteenth invention, wherein the search procedure indication unit varies timings at which operations of the focus search unit and the spherical aberration search unit are started such that the operations are ended simultaneously.

With the optical disk device of the present invention, the sum of the movement time in the layer direction and the spherical aberration movement time can be optimally shortened.

The optical disk device pertaining to the eighteenth invention is that of the seventeenth invention, wherein the focus search unit goes into a standby mode for a predetermined time after the movement of the focal point of a light beam.

With the optical disk device of the present invention, the search time can be shortened by taking advantage of the stabilization time after layer movement.

The optical disk semiconductor pertaining to the nineteenth invention comprises:
a focus error detection unit for detecting a signal corresponding to positional offset of the focal point of a light beam with respect to a surface or an information plane of an information carrier;
a focus control unit for varying a state of convergence of a light be am so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal poi nt so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the spherical aberration search unit, the focus search unit, and the track search unit, in that order, at the time of a search.

The spherical aberration derivation unit derives the amount of spherical aberration after search movement from the target information plane and the target track. With the optical disk semiconductor of the present invention, a search operation is performed by using this derived spherical aberration amount, so there is no need to vary the setting of the amount of spherical aberration every time the focus search unit and track search unit are operated, and this allows the search operation to be performed more rapidly.

The optical disk semiconductor pertaining to the twentieth invention is that of the nineteenth invention, wherein the search procedure indication unit does not put the tracking control unit in an operating state in between operation s of the focus search unit and the track search unit.

With the optical disk semiconductor of the present invention, the search time can be shortened because no track pull -in operation is performed in the midst of the search operation.

The optical disk semiconductor pertaining to the twenty -first invention is that of the nineteenth invention, wherein the search procedure indication unit actuates the track search unit after putting focus control in a non-operating state if the focus control is in an abnormal state in between operations of the focus search unit and the track search unit.

With the optical disk semiconductor of the present invention, since the amount of spherical aberration at a tar get location is set, for example, the focus control is restored from the abnormal state after the light beam has been moved to the target location. Accordingly, there is no need for focus control pull -in to be performed a number of times as in the past, s o the restoration time can be shortened.

The optical disk semiconductor pertaining to the twenty -second invention is that of the twenty-first invention, wherein the search procedure indication unit actuates the track search unit only when at least a predetermined number of tracks are searched.

With the optical disk semiconductor of the present invention, the sum of the restoration time and the movement time in the radial direction can be shortened.

The optical disk semiconductor pertaining to the twenty -third invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal poi nt of a light beam from a current information plane to the target information plane;
a track search unit for moving the focal point of a light beam from a current track to a target track; and
a search procedure indication unit for actuating the track sea rch unit, the spherical aberration search unit, and the focus search unit, in that order, at the time of a search.

The spherical aberration derivation unit derives the amount of spherical aberration after search movement from the target information plane and the target track. With the optical disk semiconductor of the present invention, the search operation is performed by using this derived spherical aberration amount, so there is no need to vary the setting of the amount of spherical aberration every ti me the focus search unit and the track search unit are operated, and this allows the search operation to be performed more rapidly.

The optical disk semiconductor pertaining to the twenty -fourth invention is that of the nineteenth or twenty-third invention, wherein the search procedure indication unit puts the focus control unit in a non-operating state while continuing operation of the track search unit if focus control is in an abnormal state during the operation of the track search unit.

With the optic al disk semiconductor of the present invention, since the amount of spherical aberration at a target location is set, for example, the focus control is restored from an abnormal state after the light beam has been moved to the target location. Accordingly, there is no need for focus control pull-in to be performed a number of times as in the past, so the restoration time can be shortened.

The optical disk semiconductor pertaining to the twenty -fifth invention is that of the twenty-fourth invention, wherein the search procedure indication unit continues the operation of the track search unit only when at least a predetermined number of tracks are searched.

With the optical disk semiconductor of the present invention, the sum of the restoration time and the movement time in the radial direction can be shortened.

The optical disk semiconductor pertaining to the twenty -sixth invention is that of the twenty-first or twenty-fourth invention, further comprising a pull-in spherical aberration setting unit for setting the amount of spherical aberration according to the information plane to which the focus is to be pulled in, wherein the search procedure indication unit actuates the focus control unit with respect to the information plane to which the pull-in spherical aberration setting unit corresponds.

With the optical disk semiconductor of the present invention, the amount of spherical aberration is set corresponding to the information plane in which focus pull -in is performed, and the focus pull-in is performed for that information plane, and this stabilizes the focus pull-in during restoration from the abnormal state of the focus control. As a result, it is possible to shorten the anticipated restoration time from the abnormal state of the focus control.

The optical disk semiconductor pertaining to the twenty -seventh invention is that of the twenty-first or twenty-fourth invention, wherein the search procedure indication unit actuates the focus control unit with respect to the information plane to which the spherical aberration search unit corresponds.

With the optical disk semiconductor of the present invention, the restoration time can be shortened because no layer movement operation is performed during restoration from the abnormal state of the focus contro 1.

The optical disk semiconductor pertaining to the twenty -eighth invention comprises:
a focus error detection unit for detecting a signal corresponding to positional offset of the focal point of a light beam with respect to a surface or an information p lane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the track search unit and the spherical aberration search unit simultaneously at the time of a search.

The optical disk semiconductor of the present invention actuates the track search unit and the spherical aberration search unit simultaneously at the time of a search, so the search operation in which it is necessary to vary the amount of correction of spherical aberration can be performed more rapidly.

The optical disk semiconductor pertaining to the twent y-ninth invention is that of the twenty-eighth invention, wherein the search procedure indication unit concludes operations of the track search unit and the spherical aberration search unit prior to a start of focus control on the target information plane.

With the optical disk semiconductor of the present invention, focus control stability can be ensured at the start of the focus control.

The optical disk semiconductor pertaining to the thirtieth invention is that of the twenty-eighth or twenty-ninth invention, wherein the search procedure indication unit varies timings at which operations of the track search unit and the spherical aberration search unit are started such that the operations are ended simultaneously.

With the optical disk semiconductor of the present invention, the sum of the movement time in the radial direction and the spherical aberration movement time can be optimally shortened.

The optical disk semiconductor pertaining to the thirty -first invention is that of the twenty-eighth or twenty-ninth invention, wherein the search procedure indication unit varies operation speeds of the track search unit and the spherical aberration search unit such that operations of the track search unit and the spherical aberration search unit are started and ended simultaneously.

With the optical disk semiconductor of the present invention, a stable tracking error signal (TE signal) can be obtained even during movement in the radial direction.

The optical disk semiconductor pertaining to the thirty -second invention is that of the thirtieth or thirty -first invention, wherein the track search unit goes into a standby mode for a predetermined time after the movement of the focal point of a light beam.

With the optical disk semiconductor of the present invent ion, the search time can be shortened by taking advantage of the stabilization time after radial movement.

The optical disk semiconductor pertaining to the thirty -third invention comprises:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carri er;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the focus search unit and the spherical aberration search unit simultaneously at the time of a search.

The optical disk semiconductor of the present invention actuates the focus search unit and spherical aberration search unit simultaneously at the time of a search, so a search operation in which it is necessary to vary the amount of correction of spherical aberration can be performed more rapidly.

The optical disk semiconductor pertaining to the thirty -fourth invention is that of the thirty-third invention, wherein the search procedure indication unit ends operations of the focus search unit and the spheric al aberration search unit prior to a start of tracking control in the target track.

With the optical disk semiconductor of the present invention, tracking control stability can be ensured at the start of the tracking control.

The optical disk semiconduct or pertaining to the thirty -fifth invention is that of the thirty-third or thirty-fourth invention, wherein the search procedure indication unit varies timings at which operations of the focus search unit and the spherical aberration search unit are started such that the operations are ended simultaneously.

With the optical disk semiconductor of the present invention, the sum of the movement time in the layer direction and the spherical aberration movement time can be optimally shortened.

The optical disk semiconductor pertaining to the thirty -sixth invention is that of the thirty-fifth invention, wherein the focus search unit goes into a standby mode for a predetermined time after the movement of the focal point of a light beam.

With the optical disk sem iconductor of the present invention, the search time can be shortened by taking advantage of the stabilization time after layer movement.

### Brief Description of the Drawings

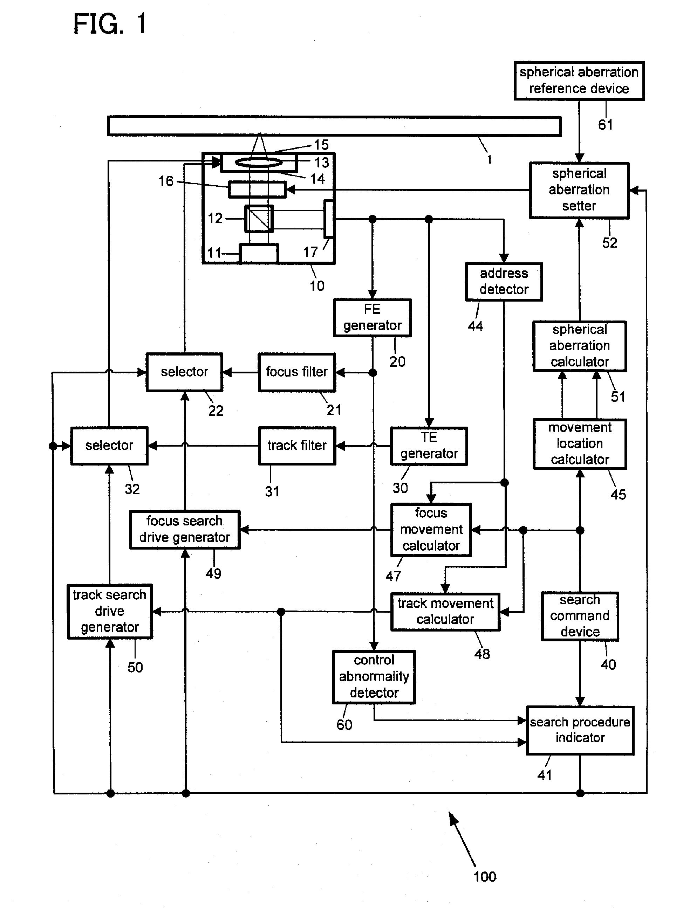

FIG. 1 is a block diagram of Embodiment 1;

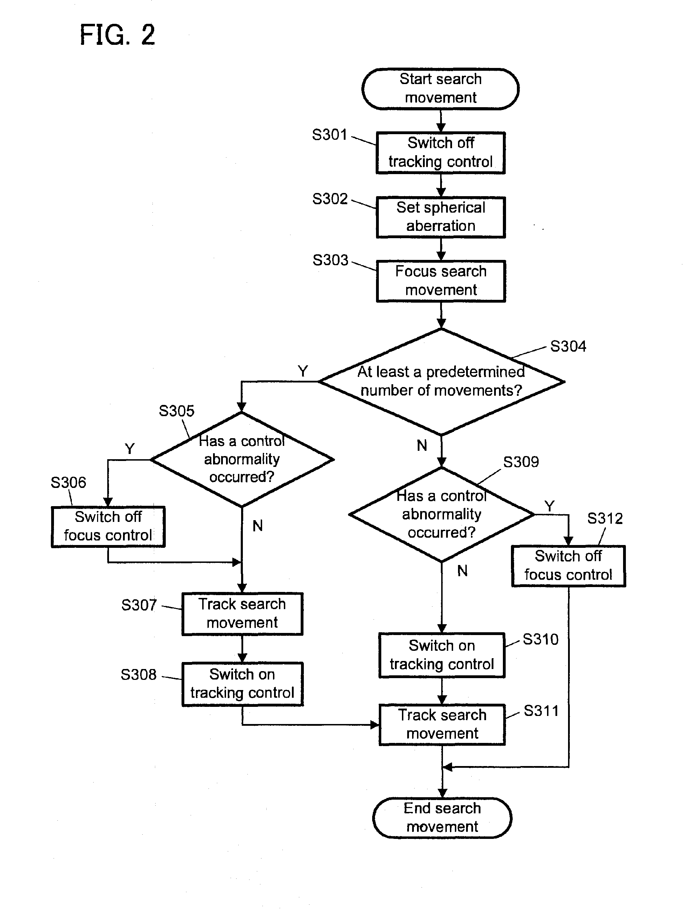

FIG. 2 is an example of a flowchart executed by the search procedure indicator in Embodiment 1;

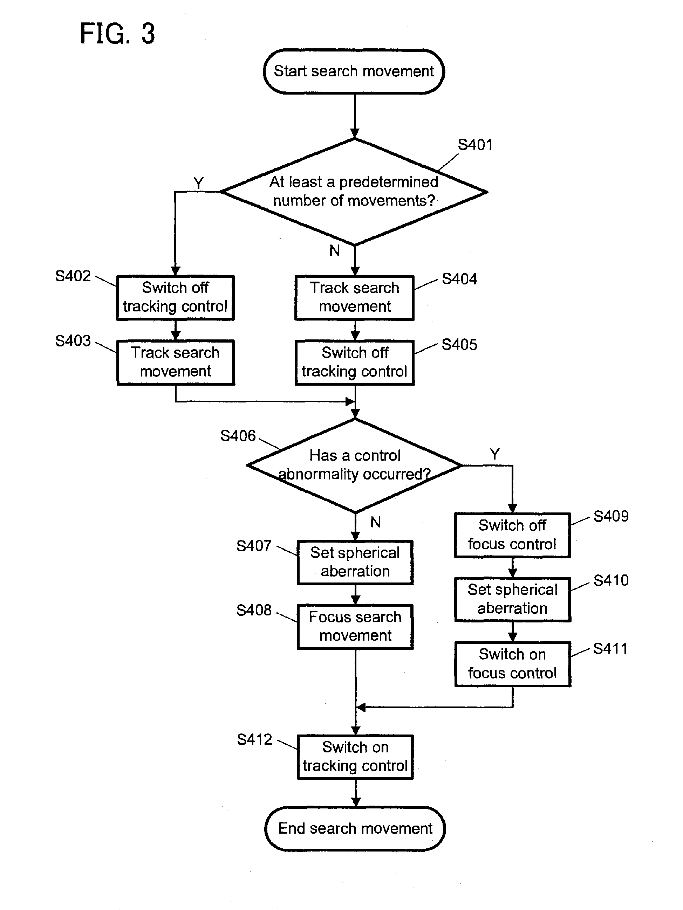

FIG. 3 is an example of a flowchart executed by the search procedure indicator in Embodiment 1;

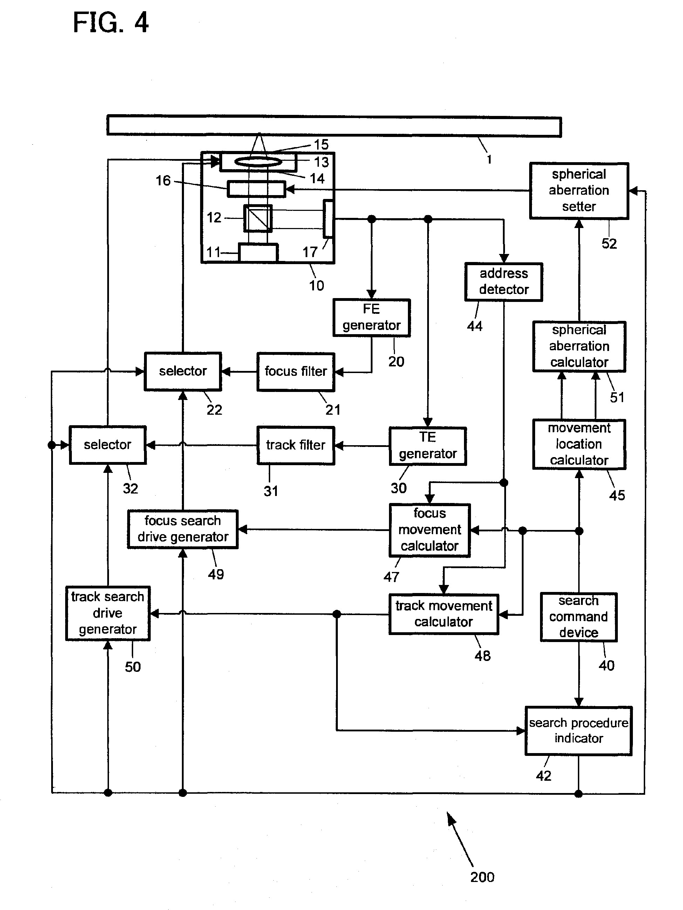

FIG. 4 is a block diagram of Embodiment 2;

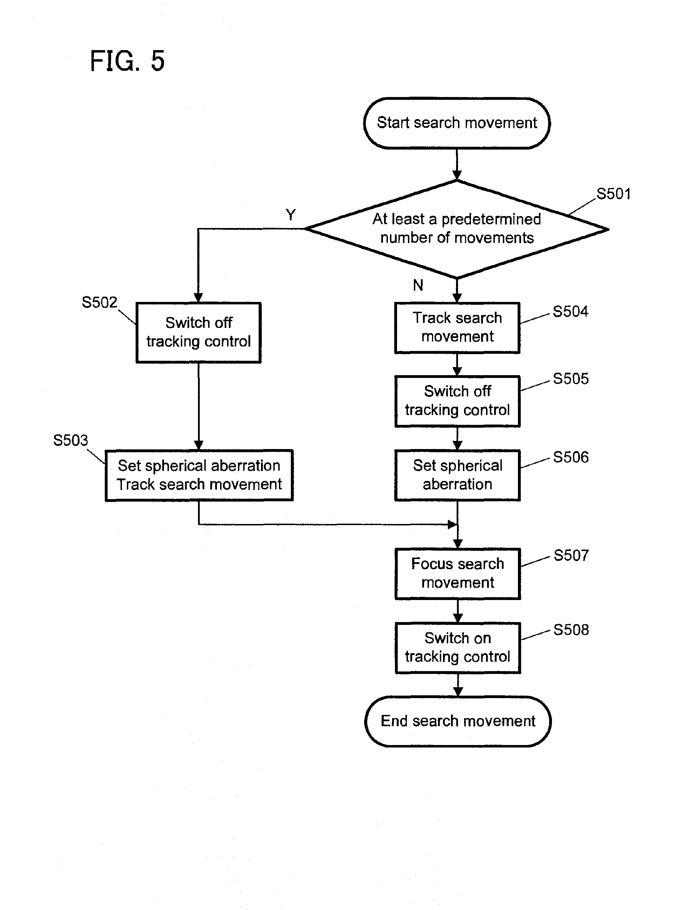

FIG. 5 is an example of a flowchart executed by the search procedure indicator in Embodiment 2;

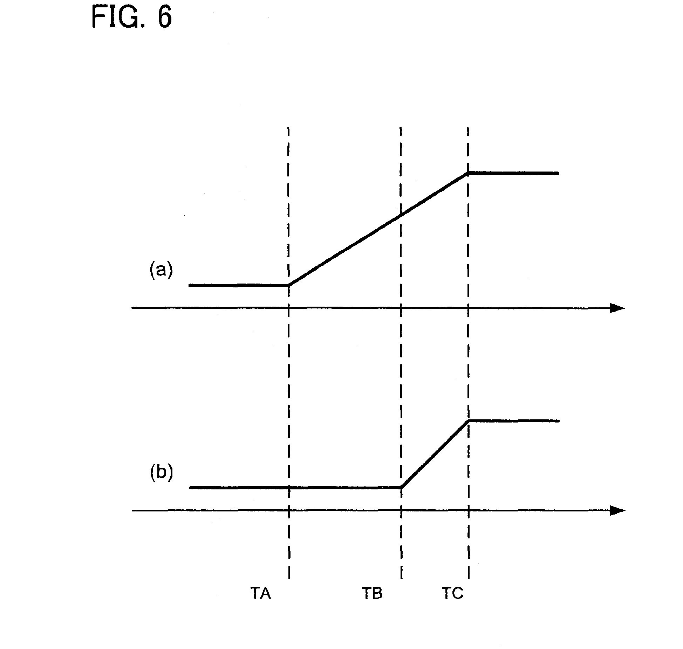

FIG. 6 (a) illustrates an example of the radial location of a light beam with respect to an optical disk in Embodiment 2, and FIG. 6 (b) illustrates an example of the signal output from a spherical aberration setter in Embodiment 2;
FIG. 7 is a block diagram of background art;
FIG. 8 is an example of a flowchart of the overall search in background art;
FIG. 9 is an example of a flowchart executed by a search procedure indicator in background art;
FIG. 10 illustrates an example of optimal setting of spherical aberration for every radial location and information plane in which the focal point of a light beam is located, in background art;

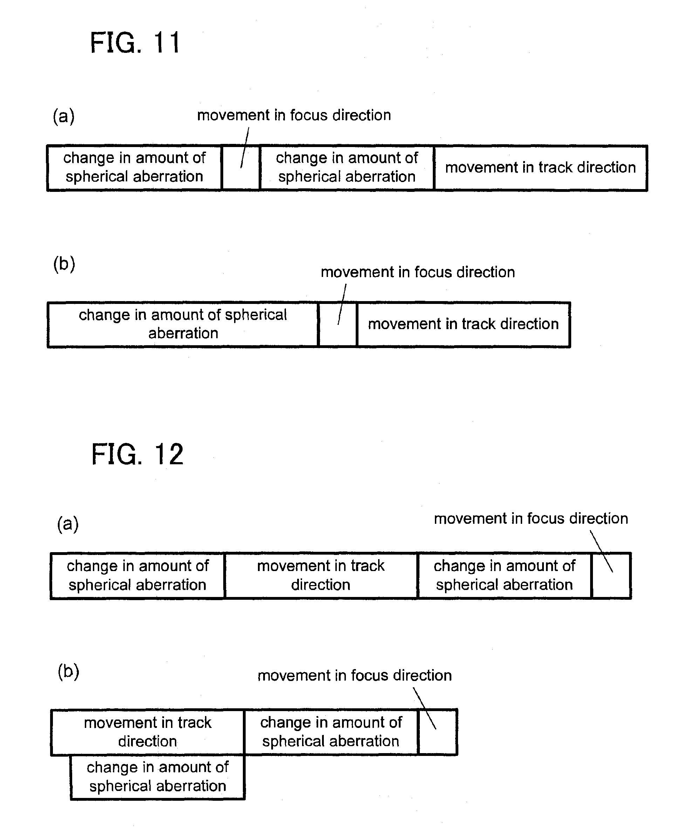

FIG. 11 (a) is an example of a time chart of a search operation in background art, and FIG. 11 (b) is an example of a time chart of a search operation in Embodiment 1; and
FIG. 12 (a) is an example of a time chart of a search operation in background art, and FIG. 12 (b) is an example of a time chart of a search operation in Embodiment 2. Reference Numerals
   - 1: optical disk
   - 10: optical head
   - 11: semiconductor laser
   - 12: beam splitter
   - 13: converging lens
   - 14: focus actuator
   - 15: track actuator
   - 16: spherical aberration generator
   - 17: photodetector
   - 20: FE generator
   - 21: focus filter
   - 22: selector
   - 30: TE generator
   - 31: track filter
   - 32: selector
   - 40: search command device
   - 41: search procedure indicator
   - 42: search procedure indicator
   - 43: search procedure indicator
   - 44: address detector
   - 45: movement location calculator
   - 46: movement layer calculator
   - 47: focus movement calculator
   - 48: track movement calculator
   - 49: focus search drive generator
   - 50: track search drive generator
   - 51: spherical aberration calculator
   - 52: spherical aberration setter
   - 60: control abnormality detector
   - 61: spherical aberration reference device

### Best Mode for Carrying Out the Invention

Embodiments of the present invention will now be described.

### (Embodiment 1)

The operation of an optical disk device 100, which is Embodiment 1, will be described through reference to FIGS. 1 to 3 and FIG. 11. FIG. 1 is a block diagram of the optical disk device 100, and FIG. 2 is an example of a flowchart of the search movement operation executed by the search procedure indicator 41. FIG. 3 is another example of a flowchart of the search movement operation executed by the search procedure indicator 41. FIG. 11 (a) is an example of a time chart of a search operation in background art, and FIG. 11 (b) is an example of a time chart of a search operation in Embodiment 1. In FIG. 11, the length of each block indicates how long the respective process takes.

In FIG. 1, those constituent elements that are the same as those in FIG. 7 (background art) are numbered the same so description thereof will be omitted. The spherical aberration de rivation unit comprises a movement location calculator 45 and a spherical aberration calculator 51. The track search unit comprises a track movement calculator 48 and a track search drive generator 50. The search procedure indication unit comprises the search procedure indicator 41. The focus error detection unit comprises a control abnormality detector 60. The pull -in spherical aberration setting unit comprises a spherical aberration reference device 61.

The search command device 40 sends a search ope ration start command to the search procedure indicator 41 so that the focal point of the light beam will be located at the target address, and sends the target address to the movement location calculator 45, the focus movement calculator 47, and the track movement calculator 48.

The search procedure indicator 41 sends an actuation signal to the selector 22, the selector 32, the focus search drive generator 49, the track search drive generator 50, and the spherical aberration setter 52, according to a predetermined procedure (discussed below) using a flowchart or the like. The track movement calculator 48 calculates the amount of movement needed in the tracking direction for the focal point of the light beam to reach the target address, on the basis of the current address from the address detector 44 and the target address from the search command device 40, and sends the calculation result to the track search drive generator 50 and the search procedure indicator 41. The track search drive generator 50 produces a drive waveform corresponding to the amount of movement obtained from the track movement calculator 48 in accordance with an actuation signal from the search procedure indicator 41, and sends this drive waveform through the selector 32 to the track ac tuator 15.

The movement location calculator 45 calculates the radial location and information plane location of the optical disk 1 where the target address from the search command device 40 is present, and sends the result to the spherical aberration calc ulator 51. The spherical aberration calculator 51 sends to the spherical aberration setter 52 a pre-stored spherical aberration setting amount corresponding to the radial location and information plane location obtained from the movement location calculat or 45. The spherical aberration reference device 61 holds in advance the amount of spherical aberration at the start of focus control, and sends this value to the spherical aberration setter 52. The spherical aberration setter 52 drives the spherical aberration generator 16 so that the amount of spherical aberration at the focal point of the light beam corresponding to the actuation signal from the search procedure indicator 41 is the spherical aberration amount from the spherical aberration calculator 51 or the spherical aberration amount from the spherical aberration reference device 61. The control abnormality detector 60 detects whether an abnormality has occurred in focus control on the basis of the signal from the FE generator 20, and sends the detection result to the search procedure indicator 41.

An example of a search movement operation performed at the command of the search procedure indicator 41 in the optical disk device 100 will now be briefly described, step by step, through reference to FIG. 2.

Step S301: Tracking control is put in a non -operating state. For example, the search procedure indicator 41 actuates the selector 32 so that the signal from the track filter 31 is not sent to the track actuator 15.

Step S302: The amount of spheri cal aberration is changed according to the target address. For example, the spherical aberration setter 52 drives the spherical aberration generator 16 according to the actuation signal from the search procedure indicator 41 so that the amount of spherical aberration will be set corresponding to the signal from the spherical aberration calculator 51.

Step S303: The focal point of the light beam is moved in the focus direction. For example, the search procedure indicator 41 actuates the selector 22, and makes a connection such that the signal from the focus search drive generator 49 is sent to the focus actuator 14. The focus search drive generator 49 sends a drive signal , through the selector 22 to the focus actuator 14 for moving the converging lens 13 up or down according to the amount of movement obtained from the focus movement calculator 47. After the converging lens 13 has been moved, the search procedure indicator 41 actuates the selector 22 and makes a connection such that the signal from the fo cus filter 21 is sent to the focus actuator 14.

Step S304: The search procedure indicator 41 determines whether or not movement in the track direction is a rough search operation. For example, if the amount of movement in the track direction obtained fr om the track movement calculator 48 is at least a predetermined number, then the search procedure indicator 41 determines that the movement in the track direction is a rough search operation.

Step S305: If the movement in the track direction is a rough search operation, it is determined whether or not a control abnormality has occurred. For example, the control abnormality detector 60 determines that a control abnormality has occurred if the absolute value of the FE signal from the FE generator 20 is over a predetermined level.

Step S306: If the movement in the track direction is a rough search operation and a control abnormality has occurred, then the search procedure indicator 41 puts the focus control in a non-operating state. The search procedure indicator 41 uses the signal from the control abnormality detector 60 to determine the occurrence of a control abnormality. The search procedure indicator 41 actuates the selector 22 so that the signal from the focus filter 21 is not sent to the focus actu ator 14.

Step S307: Regardless of whether or not a control abnormality has occurred, the focal point of the light beam is moved in the track direction. For example, the search procedure indicator 41 actuates the selector 32 and makes a connection so tha t the signal from the track search drive generator 50 is sent to the track actuator 15. The track search drive generator 50 sends the drive signal for moving the converging lens 13 in the radial direction, according to the amount of movement obtained from the track movement calculator 48, through the selector 32 to the track actuator 15.

Step S308: Tracking control is put in an operating state. For example, the search procedure indicator 41 actuates the selector 32 so that the signal from the track filt er 31 is sent to the track actuator 15.

Step S309: If the movement in the track direction is not a rough search operation, it is determined whether or not a control abnormality has occurred. For example, the control abnormality detector 60 determines th at a control abnormality has occurred if the absolute value of the FE signal from the FE generator 20 is over a predetermined level.

Step S310: If no control abnormality has occurred, the tracking control is put in an operating state. For example, the search procedure indicator 41 actuates the selector 32 so that the signal from the track filter 31 is sent to the track actuator 15.

Step S311: The focal point of the light beam is moved in the track direction. For example, the search procedure indicator 41 actuates the selector 32 and makes a connection so that the combined value of the signal from the track filter 31 and the signal from the track search drive generator 50 is sent to the track actuator 15. The track search drive generator 50 sends a drive signal for moving the converging lens 13 in the radial direction according to the amount of movement obtained from the track movement calculator 48, through the selector 32 to the track actuator 15. After this, the selector 32 makes a connection so tha t only the signal from the track filter 31 is sent to the track actuator 15.

Here, the description was of a case in which tracking search movement was performed over a short distance while the tracking control was maintained in an operating state, but it is also possible to perform tracking search movement over a short distance with the tracking control in a non -operating state. In this case, in step S311 the search procedure indicator 41 actuates the selector 32 and makes a connection so that just the signal from the track search drive generator 50 is sent to the track actuator 15. After this, the selector 32 makes a connection so that just the signal from the track filter 31 is sent to the track actuator 15.

Step S312: If a control abnormality has occurred, the focus control is put in a non-operating state. For example, the search procedure indicator 41 actuates the selector 22 so that the signal from the focus filter 21 is not sent to the focus actuator 14.

The above processing has the following eff ects.

As shown in FIG. 11 (a), with background art, in performing movement in which the focal point of the light beam moves across information planes, the setting of spherical aberration pertaining to the movement of the focal point of the light beam in th e focus direction is performed separately from the setting of spherical aberration pertaining to the movement of the focal point of the light beam in the track direction.

Meanwhile, as shown in FIG. 11 (b), with Embodiment 1 described through the above pro cedure, in performing movement in which the focal point of the light beam moves across information planes, the setting s of spherical aberration pertaining to the movement of the focal point of the light beam in the focus direction and the movement of the focal point of the light beam in the track direction are both performed at once. Setting the spherical aberration all at once allows the search time to be shortened. In particular, if the setting change polarities of the two spherical aberration settings in FIG. 11 (a) are opposite, the time it takes for the spherical aberration setting in FIG. 11 (b) will be much shorter than the total time it takes for the two "spherical aberration amount changes" in FIG. 11 (a). Thus, performing the spherical aberration settings all at once further reduces the amount of change and shortens the search time. Also, if the setting change polarities of the two spherical aberration settings in FIG. 11 a are the same, then when the spherical aberration setting is changed by increasing or decreasing the speed on the basis of a predetermined speed profile, the time it takes for the spherical aberration setting in FIG. 11 (b) will be shorter than the total time it takes for the two "spherical aberration amount changes" in FIG. 11 (a). This is because performing the setting of spherical aberration all at once reduces the time it takes to increase or decrease the speed and allows the maximum speed to be raised.

Also, with Embodiment 1, even when focus control is in an abnormal state dur ing movement in the focus direction or track direction, the spherical aberration has already been set to the spherical aberration amount at the target information plane and the target radial location. Therefore, in restoring the focus control from an abnormal state, the movement in the track direction is complete d while the focus control is still in a non - operating state, after which the focus control is pulled in. When prior art is used, what is necessary in restoring the focus control from an abnormal s tate is that the spherical aberration setting be matched to the radial location where the abnormality has occurred, the focus control be pulled in, the spherical aberration setting be again matched to the target radial location, and movement in the track direction be performed. Therefore, with Embodiment 1, it takes less time to perform the spherical aberration setting in a search operation.

Also, with Embodiment 1, the spherical aberration is set to the amount of spherical aberration at the target radial location and the target information plane prior to movement in the focus direction or movement in the track direction. Accordingly, even if the focus control is in an abnormal state prior to movement in the track direction, the focal point of the light b earn is moved in the track direction so that the radial location of the focal point of the light beam will coincide with the target radial location at which the spherical aberration setting was performed. This operation is premised on the ability to move the focal point of the light beam in the track direction even though the focus control is not in its operating state. Accordingly, the above operation need s not be applied when movement is performed using the signal from the TE generator 30, such as in movement over a short distance in the track direction. In such movement over a short distance in the track direction, there is substantially no difference from the set amount of spherical aberration itself, so it is rarely necessary to match the radial locat ion to the spherical aberration setting, and adequate precision can be attained without performing the above operation. For this reason, in the above procedure the description of movement in the track direction when the focus control was in an abnormal st ate was limited to a rough search operation, but of course such a limitation need s not apply.

Another example of a search movement operation directed by the search procedure indicator 41 in the optical disk device 100 will be briefly described step by step through reference to FIG. 3.

Step S401: The search procedure indicator 41 determines whether or not movement in the track direction is a rough search operation. For example, if the amount of movement in the track direction obtained from the track move ment calculator 48 is at least a predetermined number, the search procedure indicator 41 determines that the movement in the track direction is a rough search operation.

Step S402: If the movement in the track direction is a rough search operation, tracking control is put in a non -operating state. For example, the search procedure indicator 41 actuates the selector 32 so that the signal from the track filter 31 is not sent to the track actuator 15.

Step S403: The focal point of the light beam is moved in the track direction. For example, the search procedure indicator 41 actuates the selector 32 and makes a connection so that the signal from the track search drive generator 50 is sent to the track actuator 15. The track search drive generator 50 sends a drive signal for moving the converging lens 13 in the radial direction, according to the amount of movement obtained from the track movement calculator 48, through the selector 32 to the track actuator 15.

Step S404: If the movement in the track direction is not a rough search operation, the focal point of the light beam is moved in the track direction. For example, the search procedure indicator 41 actuates the selector 32 and makes a connection so that the combined value of the signal from the track filter 31 and the signal from the track search drive generator 50 is sent to the track actuator 15. The track search drive generator 50 sends a drive signal for moving the converging lens 13 in the radial direction, according to the amount of movement ob tained from the track movement calculator 48, through the selector 32 to the track actuator 15. After this, the selector 32 makes a connection so that only the signal from the track filter 31 is sent to the track actuator 15.

What was described here was a case in which tracking search movement was performed over a short distance while the tracking control was maintained in an operating state, but it is also possible to perform tracking search movement over a short distance with the tracking control in a n on-operating state. In this case, in step S404, the search procedure indicator 41 actuates the selector 32 and makes a connection so that only the signal from the track search drive generator 50 is sent to the track actuator 15. After this, the selector 32 makes a connection so that only the signal from the track filter 31 is sent to the track actuator 15.

Step S405: The tracking control is put in a non -operating state. For example, the search procedure indicator 41 actuates the selector 32 so that the signal from the track filter 31 is not sent to the track actuator 15.

Step S406: It is determined whether or not a control abnormality has occurred. For example, the control abnormality detector 60 determines that a control abnormality has occurred if the absolute value of the FE signal from the FE generator 20 is over a predetermined level.

Step S407: If no control abnormality has occurred, the amount of spherical aberration is changed to correspond to the target address. For example, the search procedure indicator 41 determines whether or not a control abnormality has occurred from the signal obtained from the control abnormality detector 60. Furthermore, the search procedure indicator 41 actuates the spherical aberration setter 52 if no control abnormality has occurred. The spherical aberration setter 52 drives the spherical aberration generator 16 according to the actuation signal from the search procedure indicator 41 so that the amount of spherical aberration will be set corresponding to the signal from the spherical aberration calculator 51.

Step S408: The focal point of the light beam is moved in the focus direction. For example, the search procedure indicator 41 actuates the selector 22 and makes a connection so that the signal from the fo cus search drive generator 49 is sent to the focus actuator 14. The focus search drive generator 49 sends a drive signal through the selector 22 to the focus actuator 14 for moving the converging lens 13 up and down according to the amount of movement obtained from the focus movement calculator 47. After the movement of the converging lens 13, the selector 22 makes a connection so that the signal from the focus filter 21 is not sent to the focus actuator 14.

Step S409: If a control abnormality has occur red, the focus control is put in a non-operating state. For example, the search procedure indicator 41 actuates the selector 22 so that the signal from the focus filter 21 is not sent to the focus actuator 14.

Step S410: The amount of spherical aberrati on is changed for focus pull -in operation. For example, the search procedure indicator 41 actuates the spherical aberration setter 52 and drives the spherical aberration generator 16 so that the amount of spherical aberration is set corresponding to the signal from the spherical aberration reference device 61.

Step S411: The focus control is put in an operating state. For example, the search procedure indicator 41 actuates the selector 22 so that the signal from the focus filter 21 is sent to the focus actuator 14.

Step S412: The tracking control is put in an operating state. For example, the search procedure indicator 41 actuates the selector 32 so that the signal from the track filter 31 is sent to the track actuator 15.

The above processing has th e following effects.

As shown in FIG. 11 (a), with background art, in performing movement in which the focal point of the light beam moves across information planes, the setting of spherical aberration pertaining to the movement of the focal point of the light beam in the focus direction and that to the movement of the focal point of the light beam in the track direction are performed separately. Meanwhile, as shown in FIG. 11 (b), with Embodiment 1 described through the above procedure, in performing movement in which the focal point of the light beam moves across information planes, the setting of spherical aberration pertaining to the movement of the focal point of the light beam in the focus direction and the setting of spherical aberration pertaining to the movement of the focal point of the light beam in the track direction are both performed at once. Setting the spherical aberration all at once allows the search time to be shortened. In particular, if the setting change polarities of the two spherical aberration settings in FIG. 11 (a) are opposite, the time it takes for the spherical aberration setting in FIG. 11 (b) will be much shorter than the total time it takes for the two "spherical aberration amount changes" in FIG. 11 (a). Thus, performing the spherical aberration setting all at once further reduces the amount of change and shortens the search time. Also, if the setting change polarities of the two spherical aberration settings in FIG. 11 (a) are the same, then when the spherical aberration setting is changed by increasing or decreasing the speed on the basis of a predetermined speed profile, the time it takes for the spherical aberration setting in FIG. 11 (b) will be shorter than the total time it takes for the two "spherical aberration amount changes" in FIG. 11 (a). This is because performing the setting of spherical aberration all at once reduces the time it takes to increase or decrease the speed and allows the maximum speed to be raised.

Also, if the focus control is in an abnormal state pr ior to movement in the focus direction, focus control pull-in is performed after the spherical aberration setting required to put the focus control in an operating state. Accordingly, focus control pull -in can be stabilized. This suppresses an increase in recovery time caused by loss of focus control pull-in, and allows the anticipated search time to be shortened.

As discussed above, search can be performed rapidly by changing the spherical aberration amounts all at once on the basis of the radial locati on and the information plane location targeted for the search. Also, restoration can be accomplished rapidly even when the focus control enters an abnormal state during a search operation.

With the description in Embodiment 1, movement in the track direction was performed even if the focus control was in an abnormal state prior to movement in the track direction. However, movement in the track direction may be continued even if the focus control enters an abnormal state during movement in the track direction. Also, in this description, the amount of spherical aberration was varied according to the information plane in which focus pull -in was to be performed during restoration of focus control. However, the information plane in which focus pull -in is performed may be changed according to the set amount of spherical aberration.

Furthermore, in the above embodiment, it was stated that the control abnormality detector 60 was provided to detect the occurrence of a control abnormality, but the control abnormality detector 60 may not be provided, and a control abnormality may instead be detected by the search procedure indicator 41. That is, the search procedure indicator 41 may perform the same operation as the control abnormality detector 60. Also, the search procedure indicator 41 may be performed by a control unit (not shown) that handles the control of the entire optical disk device 100.

### (Embodiment 2)

The operation of an optical disk device 200 in Embodiment 2 will be described through reference to FIGS. 4 to 6 and FIG. 12. FIG. 4 is a block diagram of the optical disk device 200. FIG. 5 is an example of a flowchart of the search movement operation executed by the search procedure indicator 42. FIG. 6 (a) illustrates an example of the radial location of a light beam with respect to the optical disk 1, and FIG. 6 (b) illustrates an example of the signal output from the spherical aberration setter 52. In FIG. 6, the horizontal axis is time. FIG. 12 (a) is an example of a time chart of a search operation i n background art, and FIG. 12 (b) is an example of a time chart of a search operation in Embodiment 2. In FIG. 12, the length of a block indicates the time it takes for that processing.

In FIG. 4, those constituent elements that are the same as those in FIG. 7 (background art) are numbered the same so description thereof will be omitted. The spherical aberration derivation unit comprises the movement location calculator 45 and the spherical aberration calculator 51. The track search unit comprises the track movement calculator 48 and the track search drive generator 50. The search procedure indication unit comprises a search procedure indicator 42.

The search command device 40 sends a search operation start command to the search procedure indicator 42 s o that the focal point of the light beam will be located at the target address, and sends the target address to the movement location calculator 45, the focus movement calculator 47, and the track movement calculator 48.

The search procedure indicator 42 sends an actuation signal to the selector 22, the selector 32, the focus search drive generator 49, the track search drive generator 50, and the spherical aberration setter 52, according to a predetermined procedure, which is discussed below using a flowch art or the like. The track movement calculator 48 calculates the amount of movement needed in the tracking direction for the focal point of the light beam to reach the target address, on the basis of the current address from the address detector 44 and th e target address from the search command device 40, and sends the calculation result to the track search drive generator 50 and the search procedure indicator 42. The track search drive generator 50 produces a drive waveform corresponding to the amount of movement obtained from the track movement calculator 48 in accordance with an actuation signal from the search procedure indicator 42, and sends this drive waveform through the selector 32 to the track actuator 15.

The movement location calculator 45 cal culates the radial location and information plane location of the optical disk 1 where the target address from the search command device 40 is present, and sends the results to the spherical aberration calculator 51. The spherical aberration calculator 51 sends to the spherical aberration setter 52 a pre-stored spherical aberration setting amount corresponding to the radial location and information plane location obtained from the movement location calculator 45. The spherical aberration setter 52 drives the spherical aberration generator 16 in accordance with the actuation signal from the search procedure indicator 42 so that the amount of spherical aberration at the focal point of the light beam is the spherical aberration amount from the spherical aberr ation calculator 51.

An example of a search movement operation performed at the command of the search procedure indicator 42 in the optical disk device 200 will now be briefly described, step by step, through reference to FIG. 5.

Step S501: The search procedure indicator 42 determines whether or not movement in the track direction is a rough search operation. For example, if the amount of movement in the track direction obtained from the track movement calculator 48 is at least a predetermined number, then the search procedure indicator 42 determines that the movement in the track direction is a rough search operation.

Step S502: If the movement in the track direction is a rough search operation, tracking control is put in a non -operating state. For example, the search procedure indicator 42 actuates the selector 32 so that the signal from the track filter 31 is not sent to the track actuator 15.

Step S503: The focal point of the light beam is moved in the track direction and, at the same time, the amount of spherical aberration is changed according to the target address. For example, the search procedure indicator 42 actuates the selector 32 and makes a connection so that the signal from the track search drive generator 50 is sent to the track actuator 15. The track search drive generator 50 sends a drive signal through the selector 32 to the track actuator 15 for moving the converging lens 13 in the radial direction according to the amount of movement obtained from the track movement calculator 48. At the same time, the search procedure indicator 42 actuates the spherical aberration setter 52. The spherical aberration setter 52 drives the spherical aberration generator 16 so as to set the spherical aberration amount corresponding to the actuation signal from the search procedure indicator 42 and corresponding to the signal from the spherical aberration calculator 51.

Step S504: If the movement in the track direction is not a rough search operation, the focal point of the light beam is moved in th e track direction. For example, the search procedure indicator 42 actuates the selector 32 and makes a connection so that the combined value of the signal from the track filter 31 and the signal from the track search drive generator 50 is sent to the trac k actuator 15. The track search drive generator 50 sends a drive signal through the selector 32 to the track actuator 15 for moving the converging lens 13 in the radial direction according to the amount of movement obtained from the track movement calculator 48,. After this, the selector 32 makes a connection so that only the signal from the track filter 31 is sent to the track actuator 15.

What was described here was a case in which tracking search movement was performed over a short distance while the tracking control was maintained in an operating state, but it is also possible to perform tracking search movement over a short distance with the tracking control in a non -operating state. In this case, in step S504, the search procedure indicator 42 actuates the selector 32 and makes a connection so that only the signal from the track search drive generator 50 is sent to the track actuator 15. After this, the selector 32 makes a connection so that only the signal from the track filter 31 is sent to the track actuator 15.

Step S505: The tracking control is put in a non -operating state. For example, the search procedure indicator 42 actuates the selector 32 so that the signal from the track filter 31 is not sent to the track actuator 15.

Step S506: The amount of spherical aberration is changed according to the target address. For example, the spherical aberration setter 52 drives the spherical aberration generator 16 according to the actuation signal from the search procedure indicator 42 so that the spherical aberration amount is set corresponding to the signal from the spherical aberration calculator 51.

Step S507: The focal point of the light beam is moved in the focus direction. For example, the search procedure indicator 42 actuates the selector 22, and makes a connection such that the signal from the focus search drive generator 49 is sent to the focus actuator 14. The focus search drive generator 49 sends a drive signal through the selector 22 to the focus actuator 14 for moving the converging lens 13 up or down according to the amount of movement obtained from the focus movement calculator 47. After the converging lens 13 has been moved, the selector 22 makes a connection such that the signal from the focus filter 21 is sent to the focus actu ator 14.

Step S508: The tracking control is put in an operating state. For example, the search procedure indicator 42 actuates the selector 32 so that the signal from the track filter 31 is sent to the track actuator 15.

The above processing has the following effects.

As shown in FIG. 12 (a), with background art, in performing movement in which the focal point of the light beam moves across information planes, the movement of the focal point of the light beam in the track direction and the setting of spherical aberration pertaining to movement are performed continuously.

Meanwhile, as shown in FIG. 12 (b), with Embodiment 2 described through the above procedure, in performing movement of the focal point of the light beam, movement of the focal point of the light beam in the track direction is carried out simultaneously with the setting of spherical aberration pertaining to movement. This shortens the search time.

This will be described in further detail through reference to FIG. 6. To perform stable fo cus control and tracking control after the focal point of the light beam has been moved, the end of spherical aberration setting and the end of movement of the focal point of the light beam are performed at the same time, at the timing TC shown in FIG. 6. More specifically, the movement of the focal point of the light beam is started at the timing TA in FIG. 6, and the change in spherical aberration is started at the timing TB in FIG. 6, so that the spherical aberration setting and the movement of the foca 1 point of the light beam will both end at the same time at the timing TC in FIG. 6 . The operation of changing the amount of spherical aberration is thus carried out simultaneously with other search operations. This shortens the time it takes for the sea rch as a whole, and allows a search to be performed more rapidly.

Furthermore, in Embodiment 2, the changing of the amount of spherical aberration and movement in the track direction are performed at the same time. Specifically, operation times of the ch anging of the amount of spherical aberration and movement in the track direction overlap each other. Here, the changing of the amount of spherical aberration and movement in the focus direction may be performed simultaneously. Also, the start timing of the changing of the amount of spherical aberration and that of movement in the track direction were determined here so that these operations would both end at the same time, but the operation speed of either the changing of the amount of spherical aberration or movement in the track direction may instead be determined so that these operations both start and end at the same time.

### (Other)

With the optical disk device described in the above embodiments through reference to the drawings, each block may consist of a single chip comprising an LSI chip or other such semiconductor device, or a single chip may include some or all of these blocks.

More specifically, in FIGS. 1 and 4, each block other than the optical disk 1 and the optical head 10 may consist of a si ngle chip, or a single chip may include some or all of these blocks.

Furthermore, although an LSI was mentioned here, depending on the degree of integration, this may be called an IC, system LSI, super -LSI, or ultra-LSI.

Also, the method for producing a n integrated circuit is not limited to LSI, and this may instead be accomplished by a dedicated circuit or a multipurpose processor. It is also possible to utilize an FPGA (Field Programmable Gate Array) that can be programmed after the manufacture of LSI, or a reconfigurable processor with which the settings or connections of circuit cells inside LSI can be reconfigured.

Moreover, if some technique for circuit integration should emerge that replaces LSI, either through advances in semiconductor technology or through derivative technology, then of course this technique may be used to integrate function blocks. There is also the possibility of the application of biotechnology or the like.

### Industrial Applicability

The present invention can be utilized for an optical disk device that performs a search operation in the recording or reproduction to or from a disk -shaped information carrier (hereinafter referred to as an optical disk) with which recording can be performed.

## Claims

1. An optical disk device, comprising:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the spherical aberration sea rch unit, the focus search unit, and the track search unit, in that order, at the time of a search.

2. The optical disk device according to claim 1, wherein the search procedure indication unit does not put the tracking control unit in an operating stat e in between operations of the focus search unit and the track search unit.

3. The optical disk device according to claim 1, wherein the search procedure indication unit actuates the track search unit after putting focus control in a non -operating state if the focus control is in an abnormal state in between operations of the focus search unit and the track search unit.

4. The optical disk device according to claim 3, wherein the search procedure indication unit actuates the track search unit only when at least a predetermined number of tracks are searched.

5. An optical disk device, comprising:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit;
a focus search unit for moving the focal point of a light beam from a current information plane to the target information plane;
a track search unit for moving the focal point of a light beam from a current track to a target track; and
a search procedure indication unit for actuating the track search unit, the spherical aberration search unit, and the focus search unit, in that order, at the time of a search.

6. The optical disk device according to claim 1 or 5, wherein the search procedure indication unit puts the focus control unit in a non -operating state while continuing operation of the track search unit if focus control is in an abnormal state during the operation of the track search unit.

7. The optical disk device according to claim 6, wherein the search procedure indication unit continues the operation of the track search unit only when at least a predetermined number of tracks are searched.

8. The optical disk device according to claim 3 or 6, further comprisi ng a pull-in spherical aberration setting unit for setting the amount of spherical aberration according to the information plane to which focus is to be pulled in,
wherein the search procedure indication unit actuates the focus control unit with respect to the information plane to which the pull -in spherical aberration setting unit corresponds.

9. The optical disk device according to claim 3 or 6, wherein the search procedure indication unit actuates the focus control unit with respect to the information plane to which the spherical aberration search unit corresponds.

10. An optical disk device, comprising:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit; a focus search unit for moving the focal point of a light beam from a current information plane to the target information plane;
a track search unit for moving the focal point of a light beam from a current track to a target track; and
a search procedure indication unit for actuating the track search unit and the spherical aberration search unit simultaneously at the time of a search.

11. The optical disk device according to claim 10, wherein the search procedure indication unit concludes operation s of the track search unit and the spherical aberration search unit prior to a start of focus control on the target information plane.

12. The optical disk device according to claim 10 or 11, wherein the search procedu re indication unit varies timing s at which operations of the track search unit and the spherical aberration search unit are started such that the operations are ended simultaneously.

13. The optical disk device according to claim 10 or 11, wherein the search procedure indication unit varies operation speeds of the track search unit and the spherical aberration search unit such that operations of the track search unit and the spherical aberration search unit are started and ended simultaneously.

14. The optical disk device according to claim 12 or 13, wherein the track search unit goes into a standby mode for a predetermined time after movement of the focal point of a light beam.

15. An optical disk device, comprising:
a focus error detection unit f or detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit; a focus search unit for moving the focal point of a light beam from a current information plane to the target information plane;
a track search unit for moving the focal point of a light beam from a current track to a target track; and
a search procedure indication unit for actuating the focus search unit and the spherical aberration search unit simultaneously at the time of a search.

16. The optical disk device according to claim 15, wherein the search procedure indication unit ends operation s of the focus search unit and the spherical aberration search unit prior to a start of tracking control in the target track.

17. The optical disk device according to claim 15 or 16, wherein the search procedure indication unit varies timing s at which operations of the focus search unit and the spherical aberration search unit are started such that the operations are ended simultaneously.

18. The optical disk device according to claim 17, wherein the focus search unit goes into a standby mode for a predetermined time after movement of the focal point of a light beam.

19. An optical disk semiconductor, compr ising:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit; a focus search unit for moving the focal point of a light beam from a current information plane to the target information plane;
a track search unit for moving the focal point of a light beam from a current track to a target track; and
a search procedure indication unit for actuating the spherical aberration search unit, the focus search unit, and the track search unit, in that order, at the time of a search.

20. The optical disk semiconductor according to claim 19, wherein the search procedure indication unit does not put the tracking control unit in an operating state in between operations of the focus search unit and the track search unit.

21. The optical disk semiconductor according to claim 19, wherein the search procedure indication unit actuates the track search unit after putting focus control in a non-operating state if the focus control is in an abnormal state in between operations of the focus search unit and the track search unit.

22. The optical disk semiconductor according to claim 21, wherein the search procedure indication unit actuates the trac k search unit only when at least a predetermined number of tracks are searched.

23. An optical disk semiconductor, comprising:
a focus error detection unit for detecting a signal corresponding to positional offset of the focal point of a light beam wit h respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a li ght beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according t o a signal from the spherical aberration derivation unit; a focus search unit for moving the focal point of a light beam from a current information plane to the target information plane;
a track search unit for moving the focal point of a light beam from a current track to a target track; and
a search procedure indication unit for actuating the track search unit, the spherical aberration search unit, and the focus search unit, in that order, at the time of a search.

24. The optical disk semiconductor according to claim 19 or 23, wherein the search procedure indication unit puts the focus control unit in a non -operating state while continuing operation of the track search unit if focus control is in an abnormal state during the operation of the track se arch unit.

25. The optical disk semiconductor according to claim 24, wherein the search procedure indication unit continues the operation of the track search unit only when at least a predetermined number of tracks are searched.

26. The optical disk semiconductor according to claim 21 or 24, further comprising a pull-in spherical aberration setting unit for setting the amount of spherical aberration according to the information plane to which the focus is to be pulled in,
wherein the search procedure indication unit actuates the focus control unit with respect to the information plane to which the pull -in spherical aberration setting unit corresponds.

27. The optical disk semiconductor according to Claim 21 or 24, wherein the search procedure indic ation unit actuates the focus control unit with respect to the information plane to which the spherical aberration search unit corresponds.

28. An optical disk semiconductor, comprising:
a focus error detection unit for detecting a signal corresponding to positional offset of the focal point of a light beam with respect to a surface or an information plane of an information carrier;
a focus control unit for varying a state of convergence of a light beam so that the focal point of the light beam traces an information plane of the information carrier according to a signal from the focus error detection unit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit; a focus search unit for moving the focal point of a light beam from a current information plane to the target information plane;
a track search unit for moving the focal point of a light beam from a current track to a target track; and
a search procedure indication unit for actuating the track search unit and the spherical aberration search unit simultaneously at the time of a search.

29. The optical disk semiconductor according to claim 28, wherein the search procedure indication unit concludes operation s of the track search unit and the spherical aberration search unit prior to a start of focus control on the target information plane.

30. The optical disk semiconductor according to claim 28 or 29, wherein the search procedure indication unit varies timing s at which operations of the track search unit and the spherical aberration search unit are started such that the operations are ended simultaneously.

31. The optical disk semiconductor according to claim 28 or 29, wherein the search procedure indication unit varies operation speeds of the track search unit and the spherical aberration search unit such that operations of the track search unit and the spherical aberration search unit are started and ended simultaneously.

32. The optical disk semiconductor according to claim 30 or 31, wherein the track search unit goes into a standby mode for a predetermined time after the movement of the focal point of a light beam.

33. An optical disk semiconductor, comprising:
a focus error detection unit for detecting a signal corresponding to positional offset of the focal point of a light beam with respect to a surface or an information p lane of an information carrier;
a focus control unit for varying a state of convergence of a light beam so that the focal point of the light beam traces an information plane of the information carrier according to a signal from the focus error detection u nit;
a track error detection unit for detecting a signal corresponding to positional offset between a light beam and a track on the information carrier;
a tracking control unit for driving the focal point of a light beam parallel to a plane of the information carrier according to a signal from the track error detection unit, and controlling the focal point so as to scan the track of the information carrier;
a spherical aberration derivation unit for deriving an amount of spherical aberration after search movement, from a target track and a target information plane to be subjected to a light beam;
a spherical aberration search unit for varying the amount of spherical aberration imparted to a light beam according to a signal from the spherical aberration derivation unit; a focus search unit for moving the focal point of a light beam from a current information plane to the target information plane;
a track search unit for moving the focal point of a light beam from a current track to a target track; and
a search procedure indication unit for actuating the focus search unit and the spherical aberration search unit simultaneously at the time of a search.

34. The optical disk semiconductor according to claim 33, wherein the search procedure indication unit ends operations of the focus search unit and the spherical aberration search unit prior to a start of tracking control in the target track.

35. The optical disk semiconductor according to claim 33 or 34, wherein the search procedure indication unit var ies timings at which operations of the focus search unit and the spherical aberration search unit are started such that the operations are ended simultaneously.

36. The optical disk semiconductor according to claim 35, wherein the focus search unit goes into a standby mode for a predetermined time after the movement of the focal point of a light beam.
